# EUROPEAN PATENT SPECIFICATION

(11) **EP 0 350 487 B1**
(45) Date of publication and mention of the grant of the patent: **07.07.1993**
(21) Application number: 88902014.5
(22) Date of filing: 02.02.1988
(51) Int. Cl.: H01M 2/16, H01M 2/14, D04H 13/00

(54) **GAS RECOMBINANT SEPARATOR**
TRENNVORRICHTUNG FÜR GASSAMMLER
SEPARATEUR POUR ACCUMULATEURS A RECOMBINAISON GAZEUSE

(30) Priority: 13.03.1987 US 25540
(43) Date of publication of application: 17.01.1990
(73) Proprietor: PPG INDUSTRIES, INC., Pittsburgh Pennsylvania 15272 (US)
(72) Inventor: JOHNSON, Harlan, Bruce, Rittman, OH 44270 (US); LAFERTY, Samuel, B., Wadsworth, OH 44281 (US); WAGNER, Melvin, Peter, Akron, OH 44311 (US)
(74) Representative: Sternagel, Hans-Günther, Dr.
(86) International application number: US8800298
(87) International publication number: WO8807097

(56) References cited:
- EP-A- 0 234 619
- WO-A-86/01841
- GB-A- 2 028 887
- GB-A- 2 069 021
- GB-A- 2 156 576
- US-A- 4 285 751
- US-A- 4 294 899
- PATENT ABSTRACTS OF JAPAN, vol. 8, no. 221 (E-271)[1658], 9th October 1984; & JP-A-59 105 263 (YUASA DENCHI K.K.) 18-06-1984
- PATENT ABSTRACTS OF JAPAN, vol. 11, no. 294 (E-544)[2741], 22nd September 1987; & JP-A-62 93 856 (MATSUSHITA ELCTRIC IND. CO. LTD) 30-04-1987
- PATENT ABSTRACTS OF JAPAN, vol. 6, no. 218 (E-139)[1096], 2nd November 1982; & JP-A-57 123 651 (NIHON MUKI SENI KOGYO K.K.) 02-08-1982
- PATENT ABSTRACTS OF JAPAN, vol. 9, no. 154 (E-325)[1877], 28th June 1985; & JP-A-60 35 456 (YUASA DENCHI K.K.) 23-02-1985

## Description

The present invention is directed to silica-containing battery separators. In commonly used electric storage batteries, such as the well known 12-volt battery employed in automobiles, separators are placed between battery plates of opposite polarity to prevent the two plates from touching and causing an electrical short. The separator is typically a microporous article fabricated from a polymeric material, e.g., natural or synthetic rubber, or a polyolefin. The separator may have a backing material of, for example, a non-woven web. The pores of the separator should be as small as possible since this reduces the danger of active materials being forced through or growing through the separator, thereby causing an electrical short.

Siliceous fillers have been used to prepare microporous battery separators. See, for example, US-A-2,302,832, which describes the use of a silica hydrogel in a rubber binder; US-A-3,351,495, which describes synthetic and natural zeolites, precipitated metal silicates, such as calcium silicate, and silica gels as the inorganic filler and extender for separators of high molecular weight polyolefins; and US-A-'s 3,696,061, 4,226,926, and 4,237,083, which describe the use of finely divided, precipitated amorphous silica, such as Hi-Sil® 233 silica, in microporous battery separators. Precipitated amorphous silica is prepared by uninterrupted acidification with inorganic acid, e.g., hydrochloric, sulfuric or carbonic acid, of an aqueous solution of sodium silicate to produce a finely-divided siliceous powder. Hi-Sil® 233 silica is reported to have a BET surface area of between 140 and 160 square meters per gram. See, for example, US-A-2,940,830.

In WO 86/01841 a new and useful composite fiber and its use, especially its use as a dimensionally stable separator is disclosed. The composite fiber is comprised of non-organic particulates bound to an organic polymer in fiber form and prepared by vigorously grinding or shearing a mixture of non-organic particules and organic precursor particles for the polymer at elevated temperature. Many non-organic substances are serviceable and valve metal oxides are highly suitable. The organic polymer fiber is advantageoulsy derived from fluorine-containing polymer. The composite fibers can serve as a filter, for instance as a filter-packing material for column chromatography, or can be suitable for separations, e.g. battery separations. The fiber may be compressed, or compressed and sintered, and thereby be useful as bearings or gaskets. When used as a separator, the separator is preferably a diaphragm for use in electrolytic cells for the production of chlorine and caustic, and the method of its preparation is preferably by direct coating onto a foraminous cathode of an electrolytic cell from a slurry or paste of composite fibers, followed by drying and heating.

Amorphous precipitated silica is used as the vehicle for introducing porosity into and for reinforcing polymeric material utilized to fabricate the battery separator. Such precipitated silica is highly absorbent and can absorb a substantial quantity of an aqueous or organic liquid while remaining free flowing. In practice, the amorphous precipitated silica is loaded with a liquid of choice, e.g., water or oil, and then blended with the polymeric material. The liquid absorbed by the silica filler is subsequently removed to impart porosity to the polymeric material. Battery separators containing between 5 and 70, e.g., between 15 and 50, weight percent of siliceous filler have been reported in the above-described patents.

The object of the present invention is to provide a non-woven porous flexible sheet having improved properties and a method for preparing it.

This object has been attained by a non-woven, porous flexible sheet consisting essentially of from 96.5 to 99.5 weight percent synthetic amorphous silica and from 0.5 to 3.5 weight percent of fibrillated, unsintered polymeric material, said synthetic amorphous silica comprising precipitated silica and from 0 to 10 weight percent of pyrogenic silica, silica gel or mixtures of pyrogenic silica and silica gel.

This sheet can be prepared by a method comprising subjecting a free flowing, substantially dry mixture of an inorganic material and fibrillatable polymeric material to mechanical shear blending forces thereby to form a substantially dry, substantially homogeneous mixture of inorganic material and fibrillated polymeric material and thereafter dry-forming the blending mixture into a flexible sheet, characterized in that the inorganic material is synthetic amorphous silica comprising precipitated silica and from 0 to 10 weight percent of pyrogenic silica, silica gel or mixtures of pyrogenic silica and silica gel, the synthetic amorphous silica is present in an amount of 96.5 to 99.5 weight percent and the polymeric material is present in an amount of 0.5 to 3.5 weight percent based on the total amount of the mixture, and in that the shear blending is conducted at temperatures insufficient to sinter the polymeric material.

Recently, completely sealed electric storage batteries have been commercialized. These sealed batteries, e.g., lead-acid batteries, are sealed so that they can operate above atmospheric pressure. Such batteries are reported to use a highly porous and partially saturated glass microfiber separator. Such batteries are referred to as electrolyte gas recombinant batteries since gas evolved at the battery plates is recombined within the battery. The battery separator used in the recombinant absorbed electrolyte battery is a key structural element of the battery because it absorbs sufficient electrolyte to provide normal battery electrical capacity while leaving enough pores, which do not contain electrolyte, so that gas, i.e., oxygen, can freely pass through it. The separator is reported to require the following physical properties:
1. High absorptivity in order to hold a sufficient quantity of electrolyte, i.e., battery acid;
2. Relatively small through-pores with high tortuosity in order to prevent shorts and dendrite growth;
3. High total porosity so that electrical resistance of the separator is low;
4. Readily wet by sulfuric acid; and
5. Resistant to attack by sulfuric acid and to oxidation.

It has now been discovered that non-woven, porous flexible sheets comprised principally of amorphous precipitated silica and a minor amount of fibrillated, unsintered fibers of a polymeric resin, e.g., a perfluorinated polymer such as polytetrafluoroethylene, may be used as a separator for electrolyte gas recombinant batteries.

The separator of the present invention is a non-woven, porous flexible sheet or mat of from 96.5 to 99.5 weight percent synethic amorphous silica, e.g., amorphous precipitated silica, and from 0.5 to 3.5 weight percent of fibrillated, unsintered fibers of a polymeric material, particularly a perfluorinated polymer such as polytetrafluoroethylene. More particularly, the sheet consists essentially of from 97.5 to 99, e.g., about 98, weight percent synthetic amorphous silica and from 1 to 2.5, e.g., 2, weight percent of the polymeric material.

Polymeric materials that may be used to prepare the battery separators described herein are those that are solid and that form fibrils or fibers, e.g., microfibers, when subjected to intensive mixing, i.e., fibrillation. The process of fibrillation involves subjecting solid particles, e.g., spherical particles, to sufficient shear stress along the orientation axis of the particle so that the molecules of the particle slip relative to each other with the consequent formation of an elongated thin fibril.

Fibrillatable polymeric materials that may be used herein may be selected from high molecular weight polyolefins such as polyethylene, polypropylene, polybutene, polyisobutylene, copolymers of ethylene and propylene, copolymers of ethylene and butene, copolymers of propylene and butene and terpolymers of ethylene, propylene and butene. Other polymers contemplated include the polyacrylates such as polymethyl acrylate, polymethyl methacrylate and, more generally, polymers prepared from the C₁-C₄ alkyl esters of acrylic and methacrylic acid. Also contemplated are products obtained from natural materials such as cellulose.

Halogen, e.g., fluorine and/or chlorine, containing polymeric resins contemplated herein include polyvinyl chloride, polyvinylidene chloride, copolymers of vinyl chloride and vinyl acetate, polyvinyl fluoride, polyvinylidene fluoride and perfluorinated polymeric materials. Perfluorinated polymers are preferred because of their high resistance to chemical attack. Examples of such perfluorinated polymeric materials include polytetrafluoroethylene (PTFE), polychlorotrifluoroethylene, polyhexafluoropropylene, copolymers of chlorotrifluoroethylene and ethylene, copolymers of ethylene and tetrafluoroethylene, copolymers of hexafluoropropylene and tetrafluoroethylene, copolymers of vinylidene fluoride with tetrafluoroethylene, hexafluoropropylene, chlorotrifluoroethylene or pentafluoropropylene, and terpolymers of vinylidene fluoride, hexafluoropropylene and tetrafluoroethylene. Also contemplated are fluoroalkyl acrylates such as poly (1,1-dihydroperfluorobutyl acrylate), poly (3-perfluoro methoxy-1,1-dihydroperfluoropropyl acrylate, poly (trifluoroisopropyl methacrylate) and the condensation product of adipic acid and 2,2,3,3,4,4-hexafluoropentanediol.

Other perfluorinated polymers contemplated include fluorinated polymers containing functional groups, such as sulfonic acid or carboxylic acid groups, or alkali metal, e.g., sodium, or ammonium salts thereof. Typical examples of such perfluorinated polymers are those described in US-A-'s 3,282,875, 3,624,053, 3,849,243, 3,506,635 and GB-B-1,145,445. The aforesaid perfluorinated polymers are those typically having a fluorinated hydrocarbon backbone chain to which are attached the functional groups or pendant side chains which in turn carry the functional groups. These polymers are prepared by copolymerizing a first fluorinated vinyl monomer(s) such as vinyl fluoride, hexafluoropropylene, vinylidene fluoride, trifluoroethylene, chlorotrifluoroethylene, perfluoro (alkyl vinyl ether), tetrafluoroethylene or mixtures thereof, with a second fluorinated vinyl monomer(s) having the functional acid group attached thereto or attached to a pendant side chain, e.g., -C(R_{f})F-CF₂-SO₂F, -O-C(R_{f})F-CF₂-SO₂F, ⁅C(Z)F⁆ₜW, or -O⁅C(Z)F⁆ₜW, wherein R_{f} is F, Cl, or a C₁-C₁₀ perfluoroalkyl group, Z is F or CF₃, t is a number from 1 to 12 and W is -COOR or -CN, wherein R is lower alkyl, e.g., C₁-C₄ alkyl. Such materials are offered under the trademarks NAFION® by E. I. Du Pont de Nemours and Company, and FLEMION® by the Asahi Glass Company, Ltd.

The aforesaid polymeric materials may be used in various forms. Of particular utility are fine powders and colloidal aqueous dispersions of the polymers. Finely divided granular forms may also be used. Aqueous colloidal dispersions are preferred. Aqueous dispersions containing from about 30 to about 70 weight percent solids are contemplated. Polytetrafluoroethylene (PTFE) is preferred.

A variety of commercially available forms of PTFE may be used to prepare the porous flexible sheet of the present invention. Among such forms are TEFLON® K-10 and K-20 fluorocarbon polymer. TEFLON K-10 is a free-flowing white powder having an average particle size of about 500 microns. TEFLON® K-20 fluorocarbon polymer is an aqueous suspensoid of the fluorocarbon particles which range in size from 0.05 to 0.5 µm (microns). Both the K-10 and K-20 forms are offered by the E. I. du Pont de Nemours & Company. TEFLON® K-20 typically contains about 33 percent by weight solids and the dispersion is stabilized with approximately 1 percent by weight of a nonionic surfactant. Other aqueous suspensoids of fluorocarbon polymer, e.g., those containing from 30 to 70 weight percent solids may also be used. The higher solids content suspensoids will contain higher amounts of surfactant for stabilization. An aqueous dispersion of the fluorocarbon polymer, e.g, PTFE, is preferred because of the smaller particle size of the fluorocarbon polymer present in the dispersion.

The preparation of polytetrafluoroethylene is well known and is illustrated by US-A-'s 2,510,112, 2,587,357, and 2,685,707. The particle size of the PTFE may vary from 0.05 to 500 microns depending on the supplier and the product form, i.e., a free-flowing white powder or aqueous dispersion. Powdered PTFE may, of course, be dispersed by the use of typical nonionic surfactants, such as used in the preparation of TEFLON® K-20 fluorocarbon polymer. The preparation of the other described polymeric materials, e.g., by bulk, solvent or emulsion polymerization, is known from the polymer literature.

It has been recognized that, when subjected to shear stresses, small particles of polymeric materials, e.g., perfluorinated polymers such as PTFE, will form fibrils or fibers of a microscopic size. Such forces involve a combination of compression and attenuation forces which have the effect of lengthening and separating the polymer particles. The aspect ratio of the fibrils, i.e., the length to diameter ratio will be in the range of 100:1 to 1000:1.

In accordance with an embodiment of the present invention, a mixture of silica and fibrillatable polymeric material is subjected to mechanical working, i.e., mechanical shear blending (fibrillating), to form a mixture of silica and polymer fibrils. The shear blending is preferably conducted at temperatures of between 50°C. and 110°C. for between 0.5 and 10 minutes. More particularly, the blending is performed at temperatures of between 70°C. and 90°C. for between 1 and 3, e.g., 2, minutes. Care should be observed during the shear blending or fibrillating of the polymeric material alone or of the polymer-silica mixture that temperatures sufficient to melt or sinter the resin are not reached. Further, it is preferred that the shear blending be conducted for a time sufficient to form initial fibrils or fibers of the polymer but that such shear blending is not continued beyond a time when the initial fibrils are themselves broken down into smaller fibers.

Fibrillation or intensive mixing of the polymer or polymeric material-silica blend may be performed in commercially available intensive mixing devices which are sometimes referred to as internal mixers, kneading mixers, double-blade batch mixers as well as intensive mixers. The most popular mixer of this type is the sigma blade or sigma-arm mixer. Some commercially available mixers of this type are those sold under the common designations Banbury mixer, Mogul mixer, C. W. Brabender Prep mixer and C. W. Brabender sigma-blade mixer.

In accordance with an embodiment of the present invention, precipitated amorphous silica and fibrillatable polymeric material are combined and blended to form a homogeneous mixture in the relative mounts previously described. The homogeneous mixture may be prepared by low energy mixing of the silica and polymer before subjecting the mixture to shear blending forces or the homogeneous mixture can be prepared in the intensive mixer previously described. Further, it is contemplated that a master batch of silica and polymeric material comprising 90 to 95 weight percent silica and 5 to 10 weight percent polymeric material may be prepared and this master batch diluted with additional silica to produce the compositions described for the porous flexible sheet. Still further, it is contemplated that the polymeric material may be first fibrillated and the fibrils then combined with the silica with gentle mixing or blending.

In a further embodiment of the present invention, it is contemplated that a mixture of silica and fibrillatable polymeric material is added to a heel of silica-fibrillated polymer (usually of the same relative composition). It has been found that the time required for intensive mixing of the resulting mixture is significantly reduced from that required for the silica-fibrillatable polymeric material blend alone. The heel can represent from 1 to 10 weight percent of the total solids subjected to intensive mixing.

The blending of an aqueous dispersion of polymeric material such as PTFE, e.g., TEFLON® K-20, with silica to prepare an admixture of between 96.5 and 99.5 weight percent silica and 0.5 and 3.5 weight percent fibrillatable polymeric material does not result in the formation of a tacky or putty-like mixture since the silica is capable of absorbing all of the water used to disperse the polymer particles and still remain dry to the touch and free-flowing. Such admixtures will be referred to herein as being substantially dry.

In accordance with an embodiment of the present invention, a substantially dry admixture of fibrillatable polymeric material, e.g., PTFE, and silica, e.g., amorphous precipitated silica, is subjected to mechanical shear blending forces, i.e., the mixture is shear blended dry, to form a substantially dry, substantially homogeneous mixture of silica and fibrillated, unsintered polymeric material, e.g., perfluorinated polymer. Such blending is performed in the absence of added liquid. The resulting shear blended mixture of silica and fibrillated polymeric material has a consistency of a putty-like or dough-like material.

The silica-fibrillated polymeric material mixture is then formed into a porous flexible sheet by dry rolling or passing it through sets of rollers, e.g., the mixture is calendered. Forming of the silica-fibrillated polymer mixture into sheets is performed at temperatures of between 50°C. and 110°C., preferably between 70°C. and 90°C. Conditions employed in the dry rolling are such as to avoid sintering of the fibrillated polymeric material, e.g., perfluorinated polymer particles and/or fibrils, and to avoid further fracturing of the polymeric material fibrils. Forming of the sheet can be accomplished by passing the admixture through one or more sets of rollers, e.g., heated rollers, having roll gaps ranging from 5 to 100 mils.

Amorphous precipitated silica used to prepare the silica fibrillated polymer blend is a free-flowing, white, fluffy, pulverulent powder that is dry to touch. Despite appearing dry, the silica normally contains between 2 and 8 percent "free water" by weight. Free water is that water which is removed from the silica by heating it at 105°C. for 24 hours. Precipitated silica also contains "bound water", which refers to that water removed by heating the silica at ignition temperature, i.e., 1000°C. to 1200°C. for an extended period, e.g., 24 hours. Bound water can constitute between about 2 and 6 weight percent of the silica. Amorphous precipitated silica has a high capacity for absorbing liquids, such as water, and can absorb significant quantities of liquid and still remain dry to the touch and free-flowing. For example, amorphous precipitated silica may absorb between 1 and 180 milliliters of water per 100 grams of silica and still remain free-flowing. Chemically, finely-divided, amorphous precipitated silica contains at least 85, typically at least 90 and more typically 93-97 weight percent SiO₂ on an anhydrous basis, i.e., not including free water.

Amorphous precipitated silica that may be used in the present invention to form the porous flexible sheet will commonly have a BET surface area from 30 to 300 square meters per gram, usually between 100 and 200 square meters per gram; an oil absorption of from 100 to 300 milliliters of oil, e.g., dibutyl phthalate, per 100 grams of silica, usually between 150 and 250 milliliters of oil per 100 grams of silica; and a water absorption value of from 100 to 200 milliliters per 100 grams of silica. The median agglomerate particle size of the silica product will be between 2 and 20 micrometers, as measured by a Coulter counter.

Amorphous precipitated silica may be prepared by a reaction of an aqueous solution of a soluble silicate, e.g., sodium, lithium or potassium silicate, most usually sodium silicate, with inorganic mineral acid, most notably carbonic acid, sulfuric acid or hydrochloric acid. Typically sodium silicate having an SiO₂:Na₂O ratio of about 3.3:1 is used to prepare the aqueous solution of soluble silicate. Particularly suited as the mineral acid is carbonic acid, which is formed in situ by the introduction of carbon dioxide into the silicate solution. This method for preparing amorphous precipitated silica is described in US-A-2,940,830. The resulting precipitated silica is usually washed in suitable vessels to remove a substantial portion of the soluble alkaline metal inorganic salt incorporated therein during the precipitation process and thereafter, the pH of the silica adjusted with an inorganic mineral acid, usually hydrochloric acid (although sulfuric acid may be used), to a final essentially neutral pH of between 6.5 and 7.3. The resulting silica is dried, e.g., in a rotary or drum drier, or spray dried, and the dried product screened to produce the commercial product.

Also contemplated is amorphous precipitated silica prepared in accordance with the method described in US-A-3,129,134. There, the silica is prepared by precipitating water-insoluble siliceous product from an aqueous alkali metal silicate solution in the presence of finely-divided particles of a water-insoluble inorganic metal salt, e.g., inorganic metal salts of carbonic acid such as the alkaline earth metal salts of carbonic acid, e.g., calcium carbonate. The water-insoluble inorganic metal salt is then substantially removed from the resulting insoluble siliceous precipitate by treatment with acid, e.g., hydrochloric acid. This treatment converts the cation of the insoluble inorganic salt into a water-soluble salt of the treatment acid and liberates the anion of the salt as a gas. The resulting amorphous precipitated silica is composed of agglomerates of substantially hollow spherical particles having a predominant hollow particle size (diameter) of between 5 x 10⁻⁶ mm (0.005 microns) and 5 x 10⁻³ mm (5 microns). The silica has a BET surface area of between 50 and 250 square meters per gram, preferably between 75 and 200 square meters per gram, and an oil absorption of from 150 to 300, preferably from 200 to 300, more preferably from 230 to 270, milliliters of oil per 100 grams of silica. The silica desirably contains less than 2 weight percent of the oxide of the metal of the water-insoluble inorganic metal salt, e.g., calcium oxide, and preferably contains less than 1, more preferably less than 0.5, and most preferably less than 0.1, weight percent of such metal oxide.

Amorphous precipitated silica also useful in the preparation of the porous flexible sheet of the present invention are those materials described in GB-A-2,169,129. The preparative method described in said publication involves preparing an aqueous alkaline metal silicate solution having a particular alkaline metal oxide concentration at preselected temperatures. Thereafter, additional alkaline metal silicate and acidifying agent are added slowly and simultaneously to the aqueous alkaline metal silicate solution with agitation and at a rate sufficient to maintain the initial alkaline metal oxide concentration at substantially the same level until various multiples of the initial amount of alkaline metal silicate have been added. Thereafter, additional acidifying agent is added to the resulting slurry until the pH is from 8 to 9 and the resulting slightly alkaline slurry aged. Subsequent to the aging step, additional acidifying agent is added to the aged slurry until the pH thereof is acidic, e.g., from 3.8 to 4.7, and the precipitated silica recovered from the acidified slurry washed and dried.

In one embodiment described in the aforesaid British Patent Publication, the initial aqueous alkaline metal silicate contains between 2.1 and 2.6 grams per liter of alkaline metal oxide at a temperature of between 82°C. and 85°C. Further alkaline metal silicate in amounts equal to from 14.5 to 19 times the amount of alkaline metal silicate present in the first aqueous alkaline metal silicate solution is added during the simultaneous addition of further alkaline metal silicate and acid. In a second embodiment, the alkaline metal oxide concentration of the first aqueous alkaline metal silicate solution is from 5.6 to 7.2 grams per liter and the temperature thereof is between 88°C. and 92°C. Between 2 and 5 times the amount of alkaline metal silicate present in the first aqueous alkaline metal silicate solution is added during the simultaneous addition of said further alkaline metal silicate and acidifying agent.

Aging of the aforedescribed alkaline precipitated silica slurry can be from 15 to 90 minutes, although longer aging times may be utilized. Aging temperatures are usually at the temperature of the liquid reaction medium, but such temperatures are not critical.

In a preferred embodiment of the present invention, the synthetic amorphous silica is precipitated silica. However, it is contemplated that the synthetic amorphous silica may comprise a mixture of precipitated silica and small amounts, e.g., up to 10 weight percent of pyrogenic silica and/or silica gel. More particularly, the synthetic amorphous silica may comprise amorphous precipitated silica and from 0 to 10 weight percent, e.g., from 5 to 10 weight percent, of pyrogenic silica, silica gel or mixtures of pyrogenic silica and silica gel.

Pyrogenic or fumed silicas are prepared commonly by reacting silicon tetrachloride vapor with oxygen and hydrogen gas at high temperatures. Pyrogenic silicas have high external surface areas. Silica gels are of two types - hydrogels and aerogels. Hydrogels may be prepared by reacting a soluble silicate such as sodium silicate with strong sulfuric acid. The gel is washed salt-free, dried, micronized and classified. Aerogels may be prepared from hydrogels by displacing the water content with an alcohol which is recovered by heating the gel in an autoclave. Gels generally have a BET surface area in the range of from 300 to 1000 square meters per gram. Both pyrogenic silicas and silica gels and their preparation are well known in the art.

### EXAMPLE 1

Amorphous precipitated silica was dry blended with sufficient TEFLON® K-20 aqueous suspensoid of fluorocarbon (PTFE) particles to provide 1, 2 and 3 weight percent of the fluorocarbon particles in the resulting blend. Blending was performed for 2 minutes in a Brabender Plastograph Model PLV3 mixer at 90°C. and 50 rpm. The silica had a BET surface area of about 163 m²/gram, an oil absorption of about 197 milliliters, and average agglomerate particle size of about 13.5 microns. The silica had a pH of 6.6 and contained 6.3 weight percent "free" water. The blended samples were hand rolled dry immediately after being removed from the Brabender into thin sheets of from about 0.19 to 0.25 centimeters (75 to 100 mils). 5.1 centimeters (Two inch) diameter discs prepared from the silica-2% fluorocarbon blend were tested for electrical resistance in a laboratory cell at 25°C. The electrolyte used was an aqueous solution of 37.5 weight percent sulfuric acid. Resistance values varied from 9,75 to 15,6 milliohm cm² (1.5 to 2.4 milliohm - in ²) (square inches) per 0.025 cm (0.01 inches).

### EXAMPLE 2

120 grams of the amorphous precipitated silica used in Example 1 was dry blended with TEFLON® K-20 aqueous suspensoid of fluorocarbon particles in an amount sufficient to obtain 2 weight percent fluorocarbon particles in a Brabender mixer for two minutes at 90°C. and 50 rpm. The resulting blend was rolled out dry on aluminum foil using a roller filled with water having a temperature of about 72°C. 5.1 centimeter (Two inch) diameter discs cut from these sheets were tested for electrical resistance in a laboratory cell at 25°C. using an aqueous solution of 37.5 weight percent sulfuric acid as the electrolyte. Resistance values obtained were about 16,25-16,9 milliohm cm² / 0.025 cm (2.5-2.6 milliohm - in ²/0.01 inch.)

### EXAMPLE 3

The procedure of Example 2 was repeated with 40 grams of the amorphous precipitated silica and sufficient of the TEFLON® K-20 suspensoid to obtain a blend of silica - 1.5 weight percent fluorocarbon. Blending was at 70°C. in the Brabender for 2½ minutes at 50 rpm. Resistance values of discs cut from sheets dry formed from the blend varied from 32,5 - 58,5 milliohm cm²/0.025cm (5 to 9 milliohm - in ²/0.01 inch.)

While the invention has been described in detail with respect to certain embodiments thereof, it is understood that the invention is not intended to be limited to such details except as and insofar as they appear in the appended claims.

## Claims

1. A method for preparing a non-woven, porous flexible sheet comprising subjecting a free flowing, substantially dry mixture of an inorganic material and fibrillatable polymeric material to mechanical shear blending forces thereby to form a substantially dry, substantially homogeneous mixture of inorganic material and fibrillated polymeric material and thereafter dry-forming the blending mixture into a flexible sheet,
**characterized in that**
the inorganic material is synthetic amorphous silica comprising precipitated silica and from 0 to 10 weight percent of pyrogenic silica, silica gel or mixtures of pyrogenic silica and silica gel, the synthetic amorphous silica is present in an amount of 96.5 to 99.5 weight percent and the polymeric material is present in an amount of 0.5 to 3.5 weight percent based on the total amount of the mixture, and in that the shear blending is conducted at temperatures insufficient to sinter the polymeric material.

2. The method of claim 1 wherein the polymeric material is a perfluorinated polymer.

3. The method of claim 2 wherein the perfluorinated material is polytetrafluoroethylene.

4. The method of claim 3 wherein an aqueous dispersion of polytetrafluoroethylene is mixed with the silica.

5. The method of claim 4 wherein the mixture contains from 97.5 to 99 weight percent silica and from 1 to 2.5 weight percent polytetrafluoroethylene.

6. The method of claim 5 wherein temperatures of between 50°C and 110°C are used to shear blend the silica-polytetrafluoroethylene mixture, and to form the resulting shear blended mixture into sheet form.

7. The method of claim 6 wherein the sheet has a thickness of from 0.013 to 0.25 cm (5 to 100 mils).

8. The method of claim 6 wherein the blended mixture is formed into a sheet by dry rolling the mixture with a heated roller.

9. The method of claim 1 wherein the mixture of synthetic amorphous silica and fibrillatable polymeric material is subjected to mechanical shear blending in the presence of from 1 to 10 weight percent of the total solids subjected to intensive mixing of a prior blended material containing from 96.5 to 99.5 weight percent silica and from 0.5 to 3.5 weight percent fibrillated polymeric material.

10. The method of claim 9 wherein the polymeric material is a perfluorinated polymer.

11. The method of claim 10 wherein the perfluorinated polymer is polytetrafluoroethylene.

12. The method of claim 10 wherein temperatures of between 50°C and 110°C are used to shear blend the silica-polytetrafluoroethylene mixture, and to form the resulting shear blended mixture into sheet form.

13. A non-woven, porous flexible sheet consisting essentially of from 96.5 to 99.5 weight percent synthetic amorphous silica and from 0.5 to 3.5 weight percent of fibrillated, unsintered polymeric material, said synthetic amorphous silica comprising precipitated silica and from 0 to 10 weight percent of pyrogenic silica, silica gel or mixtures of pyrogenic silica and silica gel.

14. The porous flexible sheet of claim 13 wherein the polymeric material is a perfluorinated polymer.

15. The porous flexible sheet of claim 14 wherein the perfluorinated polymer is polytetrafluoroethylene.

16. The porous flexible sheet of claim 15 wherein the sheet contains from 97.5 to 99 weight percent silica and from 2.5 to 1 percent polytetrafluoroethylene.

17. The porous flexible sheet of claim 16 wherein the sheet has a thickness of from 0.013 to 0.25 cm (5 to 100 mils).

18. Use of the non-woven, porous flexible sheet according to claims 14-17, as separator for an electrolyte gas recombinant battery.

19. Use of claim 18 wherein the battery is a lead acid battery.

## Patentansprüche

1. Verfahren zum Herstellen eines nicht gewebten, porösen, flexiblen Bogens durch Aussetzen einer frei fließenden, im wesentlichen trockenen Mischung eines anorganischen Materials und eines fibrillierbaren Polymermaterials mechanischen Scher- und Mischkräften, um eine im wesentlichen trockene, im wesentlichen homogene Mischung anorganischen Materials und fibrillierten Polymermaterials auszubilden, und anschließendes trockenes Verformen der Mischung zu einem flexiblen Bogen,
**dadurch gekennzeichnet,**
daß das anorganische Material eine synthetische amorphe Kieselsäure ist, enthaltend ausgefällte Kieselsäure und von 0 bis 10 Gew.-% pyrogene Kieselsäure, Silicagel oder Mischungen von pyrogener Kieselsäure und Silicagel, wobei die synthetische amorphe Kieselsäure in einer Menge von 96,5 bis 99,5 Gew.-% und das polymere Material in einer Menge von 0,5 bis 3,5 Gew.-%, bezogen auf Gesamtgewicht der Mischung, vorhanden sind und das Mischen unter Scherung bei Temperaturen erfolgt, die nicht ausreichen, um das polymere Material zu sintern.

2. Verfahren nach Anspruch 1,
**dadurch gekennzeichnet,**
daß das polymere Material ein perfluoriertes Polymer ist.

3. Verfahren nach Anspruch 2,
**dadurch gekennzeichnet,**
daß das perfluorierte Material Polytetrafluorethylen ist.

4. Verfahren nach Anspruch 3,
**dadurch gekennzeichnet,**
daß eine wäßrige Dispersion von Polytetrafluorethylen mit der Kieselsäure gemischt wird.

5. Verfahren nach Anspruch 4,
**dadurch gekennzeichnet,**
daß die Mischung von 97,5 bis 99 Gew.-% Kieselsäure und von 1 bis 2,5 Gew.-% Polytetrafluorethylen enthält.

6. Verfahren nach Anspruch 5,
**dadurch gekennzeichnet,**
daß Temperaturen zwischen 50°C und 110°C zum Mischen unter Scherung der Kieselsäure-Polytetrafluorethylenmischung und zum Ausformen der erhaltenen unter Scherung gemischten Mischung zu Bogenform verwendet werden.

7. Verfahren nach Anspruch 6,
**dadurch gekennzeichnet,**
daß der Bogen eine Dicke von 0,013 bis 0,25 cm (5 bis 100 mil) aufweist.

8. Verfahren nach Anspruch 6,
**dadurch gekennzeichnet,**
daß die Mischung zu einem Bogen durch Trockenwalzen der Mischung mit einer erwärmten Walze ausgebildet wird.

9. Verfahren nach Anspruch 1,
**dadurch gekennzeichnet,**
daß die Mischung von synthetischer amorpher Kieselsäure und fibrillierbarem Polymermaterial mechanischer Mischung unter Scherung ausgesetzt wird in Gegenwart von 1 bis 10 Gew.-%, bezogen auf Gesamtfeststoffe, die intensiver Mischung unterzogen werden, eines vorgemischten Materials, enthaltend von 96,5 bis 99,5 Gew.-% Kieselsäure und von 0,5 bis 3,5 Gew.-% fibrilliertes polymeres Material.

10. Verfahren nach Anspruch 9,
**dadurch gekennzeichnet,**
daß das polymere Material ein perfluoriertes Polymer ist.

11. Verfahren nach Anspruch 10,
**dadurch gekennzeichnet,**
daß das perfluorierte Polymer Polytetrafluorethylen ist.

12. Verfahren nach Anspruch 10,
**dadurch gekennzeichnet,**
daß Temperaturen zwischen 50°C und 110°C zum Mischen unter Scherung der Kieselsäure-Polytetrafluorethylenmischung und zum Ausformen der erhaltenen unter Scherung gemischten Mischung zu Bogenform verwendet werden.

13. Nicht gewebter, poröser, flexibler Bogen, bestehend im wesentlichen aus 96,5 bis 99,5 Gew.-% synthetischer amorpher Kieselsäure und von 0,5 bis 3,5 Gew.-% fibrillierten, nicht gesinterten polymeren Materials, wobei die synthetische amorphe Kieselsäure gefällte Kieselsäure und von 0 bis 10 Gew.-% pyrogene Kieselsäure, Silicagel oder Mischungen von pyrogener Kieselsäure und Silicagel enthält.

14. Poröser, flexibler Bogen nach Anspruch 13,
**dadurch gekennzeichnet,**
daß das polymere Material ein perfluoriertes Polymer ist.

15. Poröser, flexibler Bogen nach Anspruch 14,
**dadurch gekennzeichnet,**
daß das perfluorierte Polymer Polytetrafluorethylen ist.

16. Poröser, flexibler Bogen nach Anspruch 15,
**dadurch gekennzeichnet,**
daß der Bogen von 97,5 bis 99 Gew.-% Kieselsäure und von 2,5 bis 1% Polytetrafluorethylen enthält.

17. Poröser, flexibler Bogen nach Anspruch 16,
**dadurch gekennzeichnet,**
daß er eine Dicke von 0,013 bis 0,25 cm (5 bis 100 mil) aufweist.

18. Verwendung des nicht gewebten, porösen, flexiblen Bogens nach Ansprüchen 14 bis 17 als Trennelement in einer elektrolytischen Gasrekombinationsbatterie.

19. Verwendung nach Anspruch 18,
**dadurch gekennzeichnet,**
daß die Batterie ein Bleiakkumulator ist.

## Revendications

1. Procédé de préparation d'une feuille souple, poreuse, non tissée, conformément auquel on soumet un mélange sensiblement sec, fluide, d'une matière inorganique et d'une matière polymèrique susceptible d'être transformée en fibrilles à des forces de malaxage à cisaillement mécanique de manière à former un mélange sensiblement sec et sensiblement homogène de matière organique et de matière polymérique fibrillée et on moule ensuite à sec le mélange issu du malaxage en une feuille souple,
caractérisé en ce que
la matière inorganique est de la silice amorphe synthétique comprenant de la silice précipitée et de 0 à 10% en poids de silice pyrogénée, un gel de silice, ou des mélanges de silice pyrogénée et de gel de silice, la silice amorphe synthétique étant présente en une proportion de 96,5 à 99,5% en poids et la matière polymérique étant présente en une proportion de 0,5 à 3,5% en poids, sur base de la quantité totale du mélange et en ce que l'on effectue le malaxage à des températures insuffisantes pour fritter la matière polymérique.

2. Procédé suivant la revendication 1, caractérisé en ce que la matière polymérique est un polymère perfluoré.

3. Procédé suivant la revendication 2, caractérisé en ce que la matière perfluorée est le polytétrafluoréthylène.

4. Procédé suivant la revendication 3, caractérisé en ce que l'on mélange une dispersion aqueuse de polytétrafluoréthylène à de la silice.

5. Procédé suivant la revendication 4, caractérisé en ce que le mélange contient de 97,5 à 99% en poids de silice et de 1 à 2,5% en poids de polytétrafluoréthylène.

6. Procédé suivant la revendication 5, caractérisé en ce que l'on utilise des températures comprises entre 50°C et 110°C pour malaxer sous cisaillement le mélange de silice et de polytétrafluoréthylène et pour mouler le mélange issu du malaxage sous cisaillement ainsi obtenu pour lui conférer la forme d'une feuille.

7. Procédé suivant la revendication 6, caractérisé en ce que la feuille possède une épaisseur de 0,013 à 0,25 cm (5 à 100 mils).

8. Procédé suivant la revendication 6, caractérisé en ce que le mélange issu du malaxage est moulé en une feuille par calandrage à sec du mélange avec un rouleau chauffé.

9. Procédé suivant la revendication 1, caractérisé en ce que le mélange de silice amorphe synthétique et de matière polymérique susceptible d'être transformée en fibrilles est soumis à un malaxage à cisaillement mécanique en présence de 1 à 10% en poids des solides totaux soumis à un mélange intensif d'une matière préalablement malaxée contenant de 96,5 à 99,5% en poids de silice et de 0,5 à 3,5% en poids de matière polymérique fibrillée.

10. Procédé suivant la revendication 9, caractérisé en ce que la matière polymérique est un polymère perfluoré.

11. Procédé suivant la revendication 10, caractérisé en ce que le polymère perlfuoré est le polytétrafluoréthylène.

12. Procédé suivant la revendication 10, caractérisé en ce que l'on utilise des températures comprises entre 50 et 110°C pour malaxer sous cisaillement le mélange de silice et de polytétrafluoréthylène et pour mouler le mélange malaxé sous cisaillement ainsi obtenu de manière à lui conférer la forme d'une feuille.

13. Feuille souple, poreuse et non tissée, essentiellement constituée de 96,5 à 99,5% en poids de silice amorphe synthétique et de 0,5 à 3,5% en poids d'une matière polymérique non frittée, fibrillée, ladite silice amorphe synthétique comprenant de la silice précipitée et de 0 à 10% en poids de silice pyrogénée, de gel de silice ou de mélanges de silice pyrogénée et de gel de silice.

14. Feuille souple et poreuse suivant la revendication 13, caractérisée en ce que la matière polymérique est un polymère perfluoré.

15. Feuille souple et poreuse suivant la revendication 14, caractérisé en ce que le polymère perfluoré est le polytétrafluoréthylène.

16. Feuille souple et poreuse suivant la revendication 15, caractérisée en ce qu'elle contient de 97,5 à 99% en poids de silice et de 2,5 à 1% en poids de polytétrafluoréthylène.

17. Feuille souple et poreuse suivant la revendication 16, caractérisée en ce qu'elle possède une épaisseur de 0,013 à 0,25 cm (5 à 100 mils).

18. Utilisation de la feuille souple, poreuse et non tissée suivant l'une quelconque des revendications 14 à 17, à titre de séparateur pour une batterie à recombinaison de gaz à électrolyte.

19. Utilisation suivant la revendication 18, caractérisée en ce que la batterie est une batterie acide au plomb.
